# EUROPEAN PATENT APPLICATION

(11) **EP 4 333 271 A1**
(43) Date of publication of application: **06.03.2024**
(21) Application number: 23172319.8
(22) Date of filing: 09.05.2023
(51) Int. Cl.: H02K 9/08, H02K 9/14

(54) **ELECTRICALLY-DRIVEN POWER UNIT CAPABLE OF REPLACING FUEL ENGINE AND WORKING MACHINE**

(30) Priority: 02.09.2022 CN 202211071992
(71) Applicant: Chongqing Tuosi Electric Power Technology Co.,Ltd., Chongqing (CN)
(72) Inventor: JIANG, Chenglin, Chongqing (CN)
(74) Representative: Vossius & Partner Patentanwälte Rechtsanwälte mbB

(57) **Abstract**

The present invention discloses an electrically-driven power unit capable of replacing a fuel engine, which comprises a motor and a battery pack, wherein the motor is mounted on a base, the battery pack is supported on an upper part of the motor through a supporting frame, and one side of the motor is located below the battery pack to form an avoidance space. According to the present invention, the lower part of one side of the electrically-driven power unit is provided with the avoidance space similar to that of the traditional fuel engine, so that it is convenient to replace the small-sized fuel engine.

## Description

### TECHNICAL FIELD

The present invention relates to the technical field of general power, and in particular to an electrically-driven power unit capable of replacing a fuel engine and a working machine.

### BACKGROUND

With the intensive study of environmental issues, more power units are being driven by electric power instead of fuel.

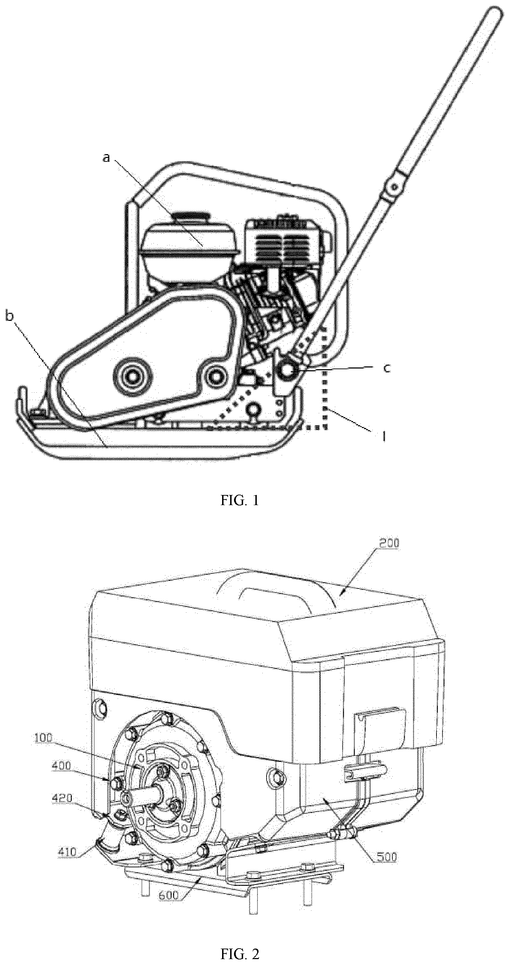

One of the characteristics of the existing small-sized fuel engine is that an avoidance space similar to a triangle is arranged at the lower part of one side of the fuel engine; as shown in FIG. 1, when the fuel engine a is carried on a working machine b (such as a flat plate tamper, a cement grinder, and a mini-tiller), the angle-adjustable handle root portion c (the flat plate tamper and the cement grinder) of the working machine or the frame (the mini-tiller) or other functional parts are arranged in the avoidance space I, to realize the operation flexibility and the compactness and miniaturization of the whole structure.

The specification of the Chinese invention patent CN112602255A discloses an electric power unit that can be mounted on various working machines in place of a fuel engine, and achieves miniaturization and versatility of the power unit to some extent.

However, referring to the specification of the above patent document and FIG. 5A, the battery 121, as an electric element 12, is arranged on the upper part of the motor 11, and the driving portion 122, as an electric element 12, is arranged on the side part of the motor 11; the entire electric power unit is substantially square, with one side of the lower part thereof not having an avoidance space of a traditional fuel engine, and thus cannot completely replace the existing fuel engine.

### SUMMARY

Aiming at the defects in the prior art, the present invention provides an electrically-driven power unit capable of replacing a fuel engine and a working machine, wherein an avoidance space similar to that of the traditional fuel engine is arranged at a lower part of one side of the electrically-driven power unit, so that it is further convenient to replace the small-sized fuel engine.

In an aspect, the present invention provides an electrically-driven power unit capable of replacing a fuel engine, which comprises a motor and a battery pack, wherein the motor is mounted on a base, the battery pack is supported on an upper part of the motor through a supporting frame, and one side of the motor is located below the battery pack to form an avoidance space.

Furthermore, the electrically-driven power unit further comprises an electric unit, wherein a length of the motor in an axial direction is shortened, and the electric unit is mounted at a front part of the motor below the battery pack.

Furthermore, the supporting frame is shaped around the motor, supports are arranged on both sides of the motor on the base, and lower parts of both sides of the supporting frame are respectively mounted on the supports on the corresponding sides through elastic vibration damping bodies;
the electric unit is fixed on the supporting frame.

Furthermore, the elastic vibration damping body close to one side of the avoidance space is lifted to an upper inclination angle close to one side of the motor.

Furthermore, the motor comprises a shell, a rotating shaft, a stator coil and an outer rotor;
the rotating shaft is rotatably mounted in the shell, and a rear end of the rotating shaft extends out of the shell;
the stator coil is arranged around the rotating shaft and fixed in the shell;
an annular portion and an end cover portion are arranged on the outer rotor, a permanent magnet is attached to an interior of the annular portion and surrounds the stator coil, and the end cover portion of the outer rotor is supported and fixed on the rotating shaft.

Furthermore, a front end of the rotating shaft penetrates out of the shell and heat dissipation impellers are mounted at the front end of the rotating shaft, an outer cover covering the heat dissipation impellers is arranged at a front end of the shell, an air inlet is formed in a front surface of the outer cover, and air outlets are circumferentially distributed at one end of the outer cover connected with the shell; the end cover portion of the outer rotor is arranged at a front end of the annular portion, air exits are peripherally arranged on the end cover portion, and a plurality of blades are circumferentially arranged on an inner side of the end cover portion in a surrounding manner.

Furthermore, the electric unit comprises a power drive unit and a controller, and heat dissipation fins are arranged on an outer side of the power drive unit.

Furthermore, a shell cover is arranged around the supporting frame, a window is arranged on a front side of the shell cover, and the heat dissipation fins on the outer side of the power drive unit are exposed through the window.

The beneficial effects of the present invention are as follows: in the present application, the avoidance space similar to that of the traditional fuel engine is arranged at the lower part of one side of the electrically-driven power unit, which is not provided with any component of the electrically-driven power unit, when the avoidance space is assembled onto the working machine, the adjustable handle root portion of the working machine or the frame itself may be arranged in the avoidance space, just like the traditional fuel engine, to realize the operation flexibility and the compactness and miniaturization of the whole structure, and it is further convenient to replace the small-sized fuel engine.

### BRIEF DESCRIPTION OF THE DRAWINGS

In order to more clearly illustrate the technical schemes in the embodiments of the present invention or in the prior art, the drawings required to be used in the description of the embodiments or the prior art are briefly introduced below. In all of the drawings, like elements or parts are generally identified by like reference numerals. In the drawings, elements or parts are not necessarily drawn to actual scale.
FIG. 1 is a schematic diagram of a fuel engine of the background art carried on a working machine;
FIG. 2 is an assembly diagram of an embodiment of the present invention;
FIG. 3 is an exploded diagram of an embodiment of the present invention;
FIG. 4 is a rear view of an embodiment of the present invention;
FIG. 5 is a sectional view A-A of FIG. 4; and
FIG. 6 is a schematic structural diagram of an outer rotor of an embodiment of the present invention.

In the figures, 100 is motor; 110 is shell; 120 is a rotating shaft; 130 is stator coil; 140 is outer rotor; 141 is annular portion; 142 is end cover portion; 143 is permanent magnet; 144 is air exit; 145 is blade; 150 is heat dissipation impeller; 160 is outer cover; 161 is air inlet; 162 is air outlet; 200 is battery pack; 300 is electric unit; 310 is power drive unit; 311 is heat dissipation fin; 320 is controller; 400 is supporting frame; 410 is support; 420 is elastic vibration damping body; 500 is shell cover; 510 is window; 600 is base; I is avoidance space.

### DETAILED DESCRIPTION

Examples of the technical schemes of the present invention will be described in detail below with reference to the accompanying drawings. The following examples are only for illustrating the technical schemes of the present invention more clearly, and therefore are only used as examples and cannot be used to limit the protection scope of the present invention.

The terms or words used in the present application should not be construed as being limited to general or dictionary meanings, but interpreted only as meanings and concepts conforming to the technical idea of the present invention based on the principle that "the inventor appropriately defines the concept of the terms in order to describe his own invention in the best way".

As shown in FIGs. 2-6, an embodiment of the present invention provides an electrically-driven power unit capable of replacing a fuel engine, which comprises a motor 100 and a battery pack 200.

The motor 100 is mounted on a base 600, and the base 600 may be directly taken as an object to be carried by the electrically-driven power unit.

The battery pack 200 is supported on an upper part of the motor 100 through a supporting frame 400, and one side of the motor 100 is located below the battery pack 200 to form an avoidance space I. In this embodiment, the avoidance space I may be arranged on the left side or the right side of the motor 100, and specifically is decided by the orientation of an output shaft of the motor 100, that is, when the output shaft of the motor 100 changes its direction, the orientation of the avoidance space I will also change accordingly, and the whole structure is mirrored.

In this embodiment, the upper part of the supporting frame 400 wraps and fits around the motor 100, and the lower part of the battery pack 200 wraps and fits on the upper part of the supporting frame 400, which makes the electrically-driven power unit more compact and achieves its miniaturization.

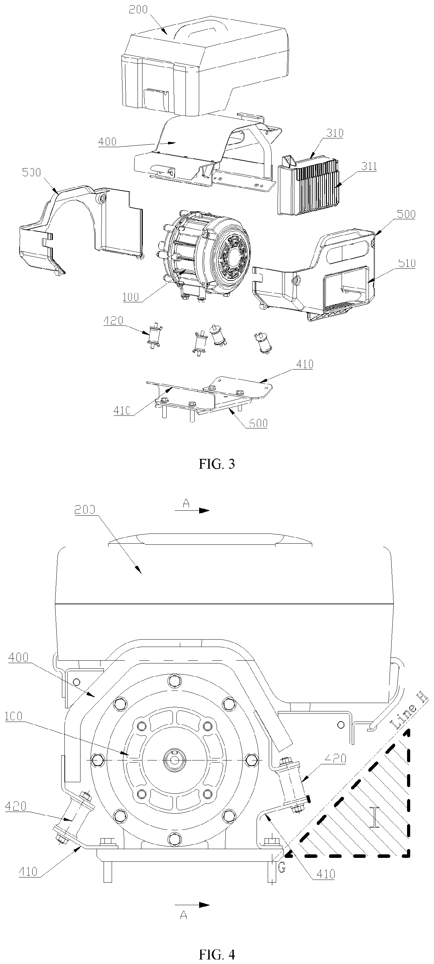

In this embodiment, the cross section of the avoidance space I is substantially triangular, with the shape and the size substantially the same as those of the avoidance space I at the lower part of the traditional fuel engine. Specifically, referring to FIG. 4, the bolt for fixing to the working machine on the right side of the bottom part, as viewed from the output shaft side, is defined as a point G, a line inclined 45° upward in the horizontal direction of the point G is defined as a line H, the line H forms a triangular avoidance space I with the horizontal extension line of the base and the right-side maximum fitting size orthogonal line, and the formed avoidance space I is not provided with any component of the electrically-driven power unit.

In other embodiments, the cross section of the avoidance space I may also be in other shapes such as a rectangle and a trapezoid.

In the present application, the avoidance space I similar to that of the traditional fuel engine is arranged at the lower part of one side of the electrically-driven power unit, which is not provided with any component of the electrically-driven power unit, when the avoidance space I is assembled onto the working machine, the adjustable handle root portion of the working machine or the frame itself may be arranged in the avoidance space I, just like the traditional fuel engine, to achieve the operation flexibility and the compactness and miniaturization of the whole structure, and it is further convenient to replace the small-sized fuel engine.

In this embodiment, the electrically-driven power unit further comprises an electric unit 300, wherein a length of the motor 100 in an axial direction is shortened, and the electric unit 300 is mounted at a front part of the motor 100 below the battery pack 200 (in this embodiment, one side of the output shaft of the motor 100 is defined as a rear side, and one side facing away from the output shaft of the motor 100 is defined as a front side). The electric unit 300 specifically comprises a power drive unit 310 (PDU for short) and a controller 320, and the power drive unit 310 and the controller 320 belong to well-known electric elements in the field of electrically-driven technologies, which is not specifically described herein.

In the prior art, the battery pack 200 of the electrically-driven power unit is arranged at the top of the motor 100, and the electric unit 300 is arranged on the circumferential side of the motor 100. Due to the space limitation, the side part of the electrically-driven power unit cannot leave an avoidance space I similar to that of the traditional fuel engine. In the present application, the whole height of the battery pack 200 is compressed, the length of the motor 100 in the axial direction is reduced, and the electric unit 300 on the side part of the motor 100 is moved to the front part of the motor 100 without changing the endurance of the battery pack 200 and the output power of the motor 100, which not only leaves the avoidance space I similar to that of the traditional fuel engine, but also can satisfy the size restriction of the fuel engine with the same specification, thereby further realizing the miniaturization of the device.

In this embodiment, the supporting frame 400 is shaped around the motor 100, supports 410 are arranged on both side of the motor 100 on the base 600, lower parts of both sides of the supporting frame 400 are respectively mounted on the supports 410 on the corresponding sides through elastic vibration damping bodies 420, and the electric unit 300 is fixed on the supporting frame 400.

The battery pack 200 and the electric unit 300 of the present application are supported on the base 600 through the supporting frame 400, the battery pack 200 and the electric unit 300 are not directly connected with the motor 100, and the supporting frame 400 is shaped around the motor 100, so that the space can be effectively utilized. Since both sides of the supporting frame 400 are vibration-damped and supported by the elastic vibration damping bodies 420, the influence of the operation vibration on the battery pack 200 and the electric unit 300 can be reduced.

Preferably, the elastic vibration damping body 420 close to one side of the avoidance space I is lifted to an upper inclination angle close to one side of the motor 100, such that the elastic vibration damping body 420 on the side avoids the corner of the triangular avoidance space I, and thus the spatial arrangement is more reasonable, and the structure is more compact.

Preferably, the elastic vibration damping bodies 420 on both sides are arranged obliquely such that the axes of the elastic vibration damping bodies 420 on both sides intersect above with each other, and the centers of gravity of the battery pack 200 and the electric unit 300 are located in the area below the intersection of the axes of the elastic vibration damping bodies 420 on both sides; through the control of the centers of gravity of the above-mentioned components to be located in the area below the intersection of the axes of the elastic vibration damping bodies 420 on both sides, the battery pack 200 and the electric unit 300 are stably supported, and a good vibration damping effect is also provided for the battery pack 200 and the electric unit 300, and the use requirements of the working machine with large vibration can be satisfied.

In order to shorten the length of the motor 100 in the axial direction, the following measures may be specifically adopted.

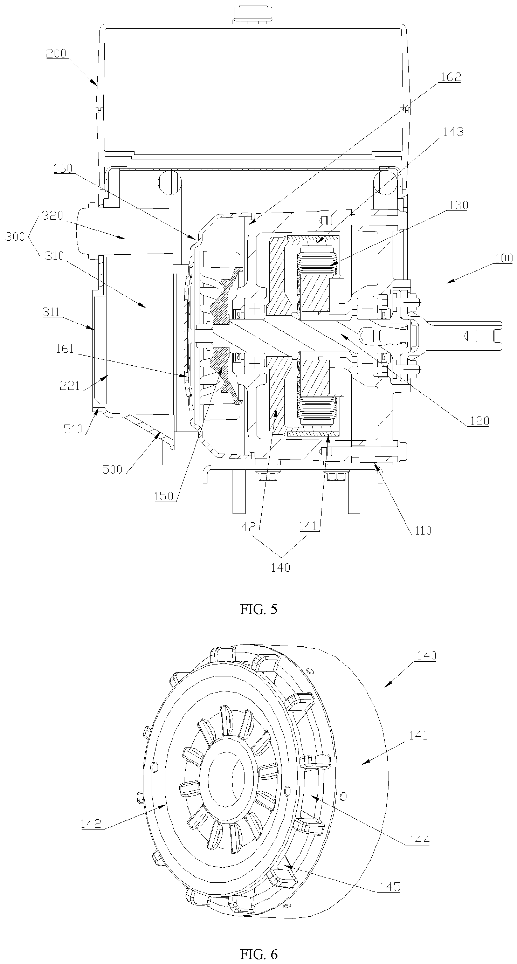

The motor 100 adopts an outer rotor structure, and specifically, referring to FIG. 5, the motor 100 comprises a shell 110, a rotating shaft 120, a stator coil 130, and an outer rotor 140, wherein the rotating shaft 120 is rotatably mounted in the shell 110, and the rear end of the rotating shaft 120 extends out of the shell 110; the stator coil 130 is arranged around the rotating shaft 120 and fixed in the shell 110; an annular portion 141 and an end cover portion 142 are arranged on the outer rotor 140, a permanent magnet 143 is attached to an interior of the annular portion 141 and surrounds the stator coil 130, and the end cover portion 142 of the outer rotor 140 is supported and fixed on the rotating shaft 120.

The permanent magnet 143 in the outer rotor 140 is made of neodymium-iron-boron so as to ensure that the output power of the motor 100 can be ensured when the length of the motor 100 in the axial direction is reduced.

When the motor 100 is under a high load, too much heat will be generated, and as the maximum output power of the motor 100 is often limited by the maximum heat production, measures are required to cool the motor 100. If the outside air is directly introduced into the motor 100 in order to increase the cooling efficiency of the motor 100, moisture or dust will be drawn into the motor 100 together with the air, thereby causing the motor 100 to fail to operate properly. For the heat dissipation inside the sealed motor 100, heat dissipation impellers may be arranged inside and outside the motor 100, and the motor 100 may be cooled by the heat exchange between the inside and the outside. However, the length of the motor 100 is increased through the arrangement of the heat dissipation impellers inside and outside the motor 100, which is not in accordance with the purpose of reducing the length of the motor 100 in the axial direction in the present application.

In order to realize heat dissipation inside the motor 100 without increasing the length of the motor 100 in the axial direction, in this embodiment, the outer rotor 140 of the motor 100 and the heat dissipation impellers inside the motor 100 are integrally designed, and specifically, referring to FIGs. 5 and 6,
the end cover portion 142 of the outer rotor 140 is arranged at a front end of the annular portion 141, air exits 144 are peripherally arranged on the end cover portion 142, and a plurality of blades 145 are circumferentially arranged on an inner side of the end cover portion 142 in a surrounding manner. When the motor 100 runs, the blades 145 drive the air inside the outer rotor to rotate at a high speed with the rotation of the outer rotor 140, and the air is discharged from the air exits 144 under the action of centrifugal force; the discharged air flows back into the outer rotor 140 through the outer part of the annular portion 141 of the outer rotor 140, so that the circulation of the air inside the motor 100 is realized.

Meanwhile, referring to FIG. 5, the front end of the rotating shaft 120 penetrates out of the shell 110 and the heat dissipation impellers 150 are mounted at the front end of the rotating shaft, an outer cover 160 covering the heat dissipation impellers 150 is arranged at the front end of the shell 110, an air inlet 161 is formed in the front surface of the outer cover 160, and air outlets 162 are circumferentially distributed at one end of the outer cover 160 connected with the shell 110. When the outer rotor 140 rotates, the rotating shaft 120 will be driven to rotate, so as to drive the heat dissipation impellers 150 outside the shell 110 to rotate. When the heat dissipation impellers 150 outside the shell 110 rotate, external air enters from the air inlet 161 of the outer cover 160 and is discharged from the air outlets 162 of the shell 110.

The air circulating inside the motor 100 takes out the heat generated by the stator coil 130 during operation and transfers the heat to the shell 110, and when the air outside the motor 100 passes through the shell 110, the shell 110 will be cooled, so that the inside of the motor 100 is cooled by the heat exchange between the inside and the outside.

In the present application, the outer rotor 140 of the motor 100 and the heat dissipation impellers inside the motor 100 are integrally designed, and the heat dissipation impellers do not need to be arranged inside the motor 100 independently, so that the heat dissipation requirement of the motor 100 can be satisfied, and the length of the motor 100 in the axial direction can be reduced.

In this embodiment, the heat dissipation fins 311 are arranged on the outer side of the power drive unit 310, so that the heat dissipation performance of the power drive unit 310 can be improved. Preferably, a shell cover 500 is arranged around the supporting frame 400, a window 510 is arranged on a front side of the shell cover 500, and the heat dissipation fins 311 on the outer side of the power drive unit 310 are exposed through the window 510, so as to further improve the heat dissipation performance.

In order to ensure that the electric unit 300 is mounted at the front end of the motor 100 without increasing the overall size of the electrically-driven power unit in the axial direction, in addition to reducing the length of the motor 100, the layout of internal elements and components and the socket layout in the electric unit 300 may be optimized so as to minimize the thickness of the electric unit 300.

An embodiment of the present invention further provides a working machine which adopts the above-mentioned electrically-driven power unit and includes a construction machine, an agricultural machine, a garden machine and the like, such as a flat plate tamper, a cement grinder, and a mini-tiller.

Finally, it should be noted that, the above embodiments are only for illustrating the technical schemes of the present invention, and not to limit the same; while the present invention has been described in detail with reference to the foregoing embodiments, it will be understood by those skilled in the art that, the technical schemes described in the foregoing embodiments may still be modified, or some or all of the technical features may be equivalently substituted; such modifications and substitutions do not depart from the spirit and scope of the embodiments of the present invention, and shall fall within the scope of the claims and the specification of the present invention.

## Claims

1. An electrically-driven power unit capable of replacing a fuel engine, comprising a motor and a battery pack, wherein the motor is mounted on a base, the battery pack is supported on an upper part of the motor through a supporting frame, and one side of the motor is located below the battery pack to form an avoidance space.

2. The electrically-driven power unit capable of replacing a fuel engine according to claim 1, further comprising:
an electric unit, wherein a length of the motor in an axial direction is shortened, and
the electric unit is mounted at a front part of the motor below the battery pack.

3. The electrically-driven power unit capable of replacing a fuel engine according to claim 1 or 2, wherein
the supporting frame is shaped around the motor, supports are arranged on both sides of the motor on the base, and lower parts of both sides of the supporting frame are respectively mounted on the supports on the corresponding sides through elastic vibration damping bodies; and preferably
the electric unit is fixed on the supporting frame.

4. The electrically-driven power unit capable of replacing a fuel engine according to any one of claims 1 to 3, wherein
the elastic vibration damping body close to one side of the avoidance space is lifted to an upper inclination angle close to one side of the motor.

5. The electrically-driven power unit capable of replacing a fuel engine according to any one of claims 1 to 4, wherein
the motor comprises a shell, a rotating shaft, a stator coil and an outer rotor;
the rotating shaft is rotatably mounted in the shell, and a rear end of the rotating shaft extends out of the shell;
the stator coil is arranged around the rotating shaft and fixed in the shell;
an annular portion and an end cover portion arranged at one end of the annular portion are arranged on the outer rotor, a permanent magnet is attached to an interior of the annular portion and surrounds the stator coil, and the end cover portion of the outer rotor is supported and fixed on the rotating shaft.

6. The electrically-driven power unit capable of replacing a fuel engine according to claim 5, wherein
a front end of the rotating shaft penetrates out of the shell and heat dissipation impellers are mounted at the front end of the rotating shaft, an outer cover covering the heat dissipation impellers is arranged at a front end of the shell, an air inlet is formed in a front surface of the outer cover, and air outlets are circumferentially distributed at one end of the outer cover connected with the shell;
the end cover portion of the outer rotor is arranged at a front end of the annular portion, air exits are peripherally arranged on the end cover portion, and a plurality of blades are circumferentially arranged on an inner side of the end cover portion in a surrounding manner.

7. The electrically-driven power unit capable of replacing a fuel engine according to any one of claims 2 to 6, wherein
the electric unit comprises a power drive unit and a controller, and heat dissipation fins are arranged on an outer side of the power drive unit.

8. The electrically-driven power unit capable of replacing a fuel engine according to claim 7, wherein
a shell cover is arranged around the supporting frame, a window is arranged on a front side of the shell cover, and the heat dissipation fins on the outer side of the power drive unit are exposed through the window.

9. A working machine, adopting the electrically-driven power unit according to any one of claims 1 to 8.
